# EUROPÄISCHE PATENTSCHRIFT

(11) **EP 3 794 073 B1**
(45) Veröffentlichungstag und Bekanntmachung des Hinweises auf die Patenterteilung: **26.07.2023**
(21) Anmeldenummer: 19722648.3
(22) Anmeldetag: 13.05.2019
(51) Int. Cl.: C08L 69/00

(54) **GEFÜLLTE POLYCARBONAT-ZUSAMMENSETZUNGEN MIT GUTER KRATZFESTIGKEIT UND REDUZIERTER VERGILBUNG**
FILLED POLYCARBONATE COMPOSITIONS WITH GOOD SCRATCH RESISTANCE AND REDUCED YELLOWING
COMPOSITIONS DE POLYCARBONATE CHARGÉES PRÉSENTANT UNE BONNE RÉSISTANCE AUX RAYURES ET UN JAUNISSEMENT RÉDUIT

(30) Priorität: 17.05.2018 EP 18172816
(43) Veröffentlichungstag der Anmeldung: 24.03.2021
(73) Patentinhaber: Covestro Intellectual Property GmbH & Co. KG, 51373 Leverkusen (DE)
(72) Erfinder: HUNGERLAND, Tim, 51061 Köln (DE); MEYER, Alexander, 40489 Düsseldorf (DE)
(74) Vertreter: Levpat
(86) Internationale Anmeldenummer: PCT/EP2019/062220
(87) Internationale Veröffentlichungsnummer: WO 2019/219615

(56) Entgegenhaltungen:
- WO-A1-2017/203480
- WO-A1-2018/015557

## Beschreibung

Die Erfindung betrifft thermoplastische Zusammensetzungen auf Basis von aromatischem Polycarbonat mit Quarz-/Quarzglaszusatz zur Erhöhung der Kratzfestigkeit sowie die Verwendung von Polysiloxan-Polycarbonat-Copolymer zur Erhöhung der thermischen Stabilität solcher Zusammensetzungen.

Die Kratzfestigkeit von Polycarbonat ist relativ gering. Formkörper aus Polycarbonat-basierten Zusammensetzungen müssen in der Regel nachbehandelt werden, um ihre Oberfläche vor Verkratzung zu schützen. Daher wird nach Möglichkeiten gesucht, die die inhärente Widerstandskraft gegenüber einer Verkratzung bei Polycarbonat-basierten Materialien erhöhen.

Zur Erhöhung der Kratzfestigkeit von Kunststoffoberflächen gibt es im Allgemeinen zwei Möglichkeiten:
1) die Beschichtung der Kunststoffoberfläche, entweder mit einer kratzbeständigen Folie, die bereits während des Spritzgussprozesses mit dem Bauteil vereinigt wird, oder mittels Aufbringen eines kratzfesten Lackes (z.B. auf Basis von UV-härtendem Acrylat);
2) die inhärente Verbesserung der Kratz- und Abriebfestigkeit durch Zugabe bestimmter Additive zu der Polymerzusammensetzung. Hierbei unterscheidet man zwischen der Zugabe von Füllstoffen, die durch ihren höheren Härtegrad die Abriebbeständigkeit der Materialoberfläche verstärken, und solchen Additiven, die den Reibungskoeffizienten der Kunststoffoberfläche reduzieren. Letztere basieren z.B. auf Siloxan- bzw. Silikon-Komponenten. Durch den reduzierten Reibungskoeffizienten wird das Abgleiten an der Oberfläche erleichtert und somit weniger Schädigung in das Material eingebracht. Dies führt somit zu weniger Störungen in der Oberflächenstruktur. Weiterhin ist bekannt, dass die Zugabe von größeren Mengen eines kratzfesteren Polymers (z.B. PMMA) zur Polymerzusammensetzung ebenfalls die Kratzfestigkeit der Gesamtzusammensetzung verbessert.

Während der Einsatz von Füllstoffen, eine Ausnahme sind hier nano-skalige Partikel, bereits bei geringen Konzentrationen zur Eintrübung des Materials führt, lassen sich die beschriebenen Siloxan-Additive auch teils in transparenten Anwendungen einsetzen. Der Zusatz weiterer polymerer Blendpartner führt, je nach Menge und Kompatibilität mit dem Basispolymer, auch zu einer starken Eintrübung. Bei der Herstellung von solchen modifizierten Polymerzusammensetzungen, insbesondere bei Polycarbonat-Compounds, ist jedoch darauf zu achten, dass die Grundeigenschaften, wie z.B. Steifigkeit, Zähigkeit und Wärmeformbeständigkeit, möglichst nicht verschlechtert werden. Siloxan-Additive haben üblicherweise aber den Nachteil, dass sie bereits in kleinen Mengen sowohl die mechanischen als auch thermischen Eigenschaften des Polycarbonates verschlechtern.

Ein weiterer Aspekt, der zu berücksichtigen ist, ist das Vergilbungsverhalten von Polycarbonat-Zusammensetzungen, insbesondere durch thermische Belastung und Lichteinstrahlung. Die Vergilbung sollte möglichst gering sein, wozu die in der Polycarbonat-Zusammensetzung verwendeten Komponenten gut miteinander verträglich sein sollten. Auch nach thermischer Belastung sollten möglichst wenig Farbveränderungen auftreten.

In WO 2013/079599 A1 sind SiOz-gefüllte Polycarbonat-Zusammensetzungen beschrieben, die eine erhöhte Kratzfestigkeit aufweisen. Ab einer Füllstoffkonzentration von 10 Gew.-% wird eine ausreichende Verbesserung der Kratzfestigkeit beobachtet. Die Wahl des geeigneten SiOz-Typs - gebrannt oder ungebrannt- ist jedoch ebenfalls von wichtiger Bedeutung, denn durch den Einsatz von Füllstoffen in Polycarbonat wird, je nach Verträglichkeit der anorganischen Partikel mit dem Polymer, die optische Qualität reduziert, was zu stärkerer Vergilbung führt. Außerdem führen solche Unverträglichkeiten zu einem Abbau der Polycarbonatmatrix, unter anderem einhergehend mit reduzierten mechanischen Eigenschaften. Grundsätzlich sollte ein Füllstoff mit möglichst niedrigem Gehalt an Verunreinigungen verwendet werden, die zum Abbau von Polycarbonat beitragen. Vollständig reine Füllstoffe gibt es jedoch nicht, daher ist immer auch eine geeignete Additivierung zur Neutralisation der Nebenkomponenten erforderlich.

WO 2018/015557 A1 beschreibt kratzfeste Polycarbonat-Zusammensetzungen enthaltend 50 bis 90 Gew.-% aromatisches Polycarbonat und 1 bis 20 Gew.-% Quarzgut mit einem D₅₀ von 1 bis 10 µm. Es ist nicht beschrieben, wie sich die Wärmestabilität dieser Zusammensetzungen verbessern lässt. µ

CN 106589880 A beschreibt die Verwendung von Nano-Siliciumdioxid mit einer Partikelgröße von 10 bis 30 nm zur Verbesserung der Kratzfestigkeit in transparenten Blends aus Polycarbonat und Siloxan-Polycarbonat-Copolymer. Es werden sowohl ein Schlagzähmodifikator, der erforderlich ist, da das nano-Siliciumdioxid die Schlagzähigkeit herabsetzt, als auch weitere Additive, wie Thermostabilisatoren, zugesetzt.

US 2013/0261234 A1 beschreibt die Herstellung von flammgeschützten Polycarbonat-Zusammensetzungen mit guter Wärmeformbeständigkeit sowie verbesserter Bleistifthärte unter Verwendung von beschichtetem gebranntem nano-SiOz mit Partikeldurchmessern im Nano-Bereich in Polycarbonat, in Polysiloxan-Polycarbonat-Copolymer bzw. in Polycarbonat/Polysiloxan-Polycarbonat-Copolymer-Blends. Als optionale Komponenten werden Acrylnitril-Butadien-Styrol (ABS) oder Polymethylmethacrylat (PMMA) als Blendpartner eingesetzt, wobei die beschriebenen Zusammensetzungen eine verbesserte Bleistifthärte aufweisen.

JP 2009084550 A beschreibt die Verwendung von chemisch an das Polymer gebundenem anorganischem Oxid mit mittleren Partikelgrößen bis zu 100 nm, z.B. Siliciumdioxid, zur Verbesserung der Kratzfestigkeit in transparenten Polycarbonat-Zusammensetzungen.

Nano-Siliciumdioxid hat sich aber insofern als nachteilig herausgestellt, da es die Schlagzähigkeit der Zusammensetzungen stark herabsetzt.

Keines der Dokumente beschreibt, wie eine hohe Kratzfestigkeit von Polycarbonat bei gleichzeitig guter thermischer Stabilität, gemessen anhand einer möglichst geringen Änderung des Yellowness Indexes, erzielbar ist.

WO 2017/203480 A1 beschreibt Zusammensetzungen, enthaltend aromatisches Polycarbonat, ein hochtemperaturstabiles Polycarbonat wie PPC, ein Polycarbonat-Polysiloxan-Copolymer, Flammschutzmittel und Glasfasern. Es wird beschrieben, dass der Zusatz von Polymeren wie PPC oder PPPBP/BPA für eine gute Wärmestabilität notwendig ist.

Aufgabe war es daher, entsprechende Polycarbonat-Zusammensetzungen bereitzustellen. Dabei sollten das Zugmodul, die Schlagzähigkeit und/oder die Erweichungstemperatur möglichst nicht herabgesetzt sein.

Überraschenderweise wurde nun gefunden, dass bei der Verwendung von SiO₂-Partikeln mit einer Partikelgröße D₅₀ von mindestens 2,0 µm in Kombination mit Polysiloxan-Polycarbonat-Copolymer nicht nur die Kratzfestigkeit der Formmassen erhöht, sondern gleichzeitig die Vergilbung, insbesondere die Steigerung der Vergilbung bei thermischer Belastung, reduziert werden kann.

Gegenstand der Erfindung ist daher eine thermoplastische Zusammensetzung, enthaltend
A) 10 bis 29 Gew.-% Quarz und/oder Quarzglas mit einem D₅₀, bestimmt mittels Laserbeugung nach ISO 13320:2009-10, von mindestens 2,0 µm,
B) 1 bis 15 Gew.-% Polysiloxan-Polycarbonat-Copolymer als aromatisches Polycarbonat,
C) mindestens 56 Gew.-% weiteres aromatisches Polycarbonat.

### Komponente A

Als Komponente A kommen natürlich vorkommende oder synthetisch hergestellte Quarze sowie Quarzglase zum Einsatz, welche möglichst homogen, bevorzugt homogen, in der Zusammensetzung verteilt sind.

Die in der Erfindung verwendeten Quarze weisen bevorzugt eine sphärische und/oder annähernd sphärische Korngestalt auf. Annähernd sphärisch bedeutet hierbei Folgendes: Sofern die Kugel durch von einem gemeinsamen Ursprung ausgehende, in den Raum gerichtete Achsen gleicher Länge beschrieben wird, wobei die Achsen den Radius der Kugel in alle Raumrichtungen definieren, ist für die sphärischen Partikel eine Abweichung der Achsenlängen vom Idealzustand der Kugel von bis zu 20% möglich, um noch als annähernd sphärisch zu gelten.

Die Quarze sind durch einen mittleren Durchmesser d₅₀, bestimmt nach ISO 13320:2009-10, von mindestens 2,0 µm, bevorzugt 2,0 bis 10 µm, weiter bevorzugt von 2,5 bis 8,0 µm, noch weiter bevorzugt 3,5 bis 6 µm, besonders bevorzugt bis 6,0 µm, ganz besonders bevorzugt 4 bis 5,5 µm, gekennzeichnet.

Sofern im Rahmen der vorliegenden Erfindungsbeschreibung Ausführungsformen als bevorzugt etc. in der Zusammensetzung enthaltene beschrieben sind, geben diese zunächst eine Einschränkung hinsichtlich einer mindestens unter der jeweiligen Komponente fassbare, in der Zusammensetzung enthaltenen Komponente vor. Weiter bevorzugt umfasst die vollständige jeweilige Komponente diese Einschränkung.

Der D₉₀, bestimmt nach ISO 13320:2009-10, beträgt bevorzugt < 25 µm, weiter bevorzugt < 20 µm, besonders bevorzugt ≤ 17 µm.

Der D₉₈, bestimmt nach ISO 13320:2009-10, beträgt bevorzugt < 30 µm, weiter bevorzugt < 20 µm, noch weiter bevorzugt ≤ 18 µm, besonders bevorzugt < 18 µm, ganz besonders bevorzugt ≤ 17 µm.

Bevorzugt weisen die Quarze eine spezifische BET-Oberfläche, bestimmt durch Stickstoffadsorption gemäß ISO 9277:2014-01, von 0,4 bis 8,0 m²/g, weiter bevorzugt von 1,0 bis 6,5 m²/g, besonders bevorzugt von 1,5 bis 6,5 m²/g, auf.

Weiter bevorzugt ist Quarzglas (gebranntes Siliciumdioxid) mit nur maximal 3 Gew.-% Nebenbestandteilen, wobei vorzugsweise der Gehalt an
Al₂O₃ < 2,0 Gew.-%, weiter bevorzugt < 1,0 Gew.-%, noch weiter bevorzugt < 0,50 Gew.-%,
Fe₂O₃ < 0,05 Gew.-%,
(CaO + MgO) < 0,1 Gew.-%,
(Na₂O + K₂O) < 0,1 Gew.-% ist, jeweils bezogen auf das Gesamtgewicht des Quarzes bzw. Quarzglases. Grundsätzlich kann aber auch ungebranntes Siliciumdioxid verwendet werden.

Besonders bevorzugt beträgt der Siliciumdioxid-Anteil mindestens 99,0 Gew.-%.

Bevorzugt werden Quarze mit einem pH-Wert, gemessen gemäß ISO 10390:2005 in wässriger Suspension, im Bereich 6 bis 9, weiter bevorzugt 6,5 bis 8,0 eingesetzt.

Sie weisen bevorzugt eine Ölabsorptionszahl gemäß ISO 787-5:1980 von bevorzugt 20 bis 30 g/100 g auf.

In bevorzugter Ausführungsform handelt es sich bei Komponente B um feinteilige Quarzmehle, die durch eisenfreie Mahlung mit nachfolgender Windsichtung aus aufbereitetem Quarzsand hergestellt wurden.

Besonders bevorzugt wird "fused Silica" als Komponente B eingesetzt, wobei es sich um Quarzglas handelt, welches bevorzugt aus eisenfreier Mahlung und anschließend elektrisch erschmolzenem und wieder erstarrtem Siliciumdioxid hergestellt wird.

Die Quarze bzw. Quarzglase können eine Schlichte an der Oberfläche aufweisen, wobei bevorzugt Epoxy-modifizierte, Polyurethan-modifizierte und nichtmodifizierte Silanverbindungen, Methylsiloxan-, und Methacrylsilan-Schlichten oder Mischungen der vorgenannten Silanverbindungen zum Einsatz kommen. Weiter bevorzugt ist eine Epoxysilanschlichte. Die Beschlichtung von anorganischen Füllstoffen erfolgt nach den allgemeinen, dem Fachmann bekannten Verfahren. Besonders bevorzugt weisen die Quarze bzw. Quarzglase allerdings keine Schlichte auf.

Die Menge an Quarz und/oder Quarzglas in der Zusammensetzung beträgt 10 bis 29 Gew.-%, bevorzugt 15 bis 28 Gew.-%, weiter bevorzugt 18 bis 25 Gew.-%, besonders bevorzugt bis 22 Gew.-%, bezogen auf die Gesamtzusammensetzung.

### Komponente B

Die Polysiloxan-Polycarbonat-Copolymere (SiCoPCs) betreffen Blockcokondensate mit folgenden Struktureinheiten 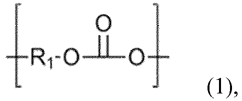
wobei R1 ein divalenter substituierter oder unsubstituierter aromatischer Rest
oder die Struktureinheit (1) eine Mischung aus Bausteinen ist, wobei R1 ein divalenter substituierter oder unsubstituierter aromatischer Rest ist und der Struktureinheit (2) 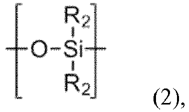
wobei R2 unabhängig voneinander ein linearer oder verzweigter aliphatischer Rest, bevorzugt C₁-bis C₁₂-Alkylrest, besonders bevorzugt C₁- bis C₄-Alkylrest, insbesondere Methyl, oder ein substituierter oder unsubstituierter aromatischer Rest, bevorzugt Phenyl, ist.

Ganz besonders bevorzugte Struktureinheiten (2) sind Dimethylsiloxan-, oder Diphenylsiloxan-Methyl/Phenylsiloxan- oder Mischungen aus Dimethylsiloxan- und Diphenylsiloxaneinheiten.

In der Struktureinheit (1) ist R1 bevorzugt von Dihydroxyarylverbindungen abgeleitet, welche der Formel (3) entsprechen:

HO-Z-OH (3),

in welcher

Z ein aromatischer Rest mit 6 bis 30 C-Atomen ist, der einen oder mehrere aromatische Kerne enthalten kann, substituiert sein kann und aliphatische Reste bzw. Alkylaryle oder Heteroatome als Brückenglieder enthalten kann.

Bevorzugt steht Z in Formel (3) für einen Rest der Formel (3a) 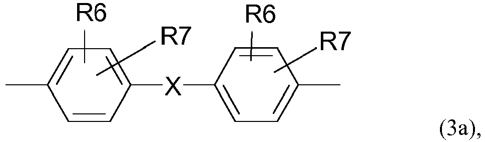 in der
R6 und R7 unabhängig voneinander für H, C₁- bis Cis-Alkyl, C₁- bis Cis-Alkoxy, Halogen wie Cl oder Br oder für jeweils gegebenenfalls substituiertes Aryl- oder Aralkyl, bevorzugt unabhängig voneinander für H oder C₁- bis C₁₂-Alkyl, besonders bevorzugt für H oder C₁- bis C₈-Alkyl und ganz besonders bevorzugt unabhängig voneinander für H oder Methyl stehen, und
X für -CO-, -O-, -S-, C₁- bis C₆-Alkylen, C₂- bis C₅-Alkyliden, C₆- bis C₁₀-Cycloalkyliden oder für C₆- bis C₁₂-Arylen, welches gegebenenfalls mit weiteren Heteroatome enthaltenden aromatischen Ringen kondensiert sein kann, steht.

Bevorzugt steht X für C₁- bis C₅-Alkylen, C₂- bis C₅-Alkyliden, C₆- bis C₉-Cyclohexyliden -O- , - SO- , -CO- , -S- , -SO₂-, besonders bevorzugt für Isopropyliden, 3,3,5-Trimethylcyclohexyliden oder Sauerstoff, insbesondere für Isopropyliden.

Für die Herstellung der erfindungsgemäßen SiCoPCs geeignete Dihydroxyarylverbindungen der Formel (3) sind beispielsweise Hydrochinon, Resorcin, Bis-(hydroxyphenyl)-alkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, [alpha],[alpha]'-Bis-(hydroxyphenyl)-diisopropylbenzole, sowie deren alkylierte, kernalkylierte und kernhalogenierte Verbindungen.

Ferner bevorzugte Dihydroxyarylverbindungen der Formel (3) sind 4,4'-Dihydroxydiphenyl, 2,2-Bis-(4-hydroxyphenyl)-1-phenyl-propan, 1,1-Bis-(4-hydroxyphenyl)-phenyl-ethan, 2,2-Bis-(4-hydroxyphenyl)propan, 2,2-Bis-(3-methyl, 4-hydroxyphenyl)-propan, 2,4-Bis-(4-hydroxyphenyl)-2-methylbutan, 1,3-Bis-[2-(4-hydroxyphenyl)-2-propyl]benzol (Bisphenol M), 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,3-Bis-[2-(3,5-dimethyl-4-hydroxyphenyl)-2-propyl]-benzol. 1,1-Bis-(4-hydroxyphenyl)-cyclohexan und 1,1-Bis-(4-hydroxyphenyl)-3,3,5-trimethylcyclohexan.

Besonders bevorzugte Dihydroxyarylverbindungen der Formel (3) sind 2,2-Bis-(4-hydroxyphenyl)-propan (BPA), Hydrochinon, 1,1-Bis-(4-hydroxyphenyl)-3,3,5-trimethylcyclohexan und 2,2-Bis-(3-methyl, 4-hydroxyphenyl)-propan.

Diese und weitere geeignete Dihydroxyarylverbindungen sind kommerziell erhältlich und z. B. in "H. Schnell, Chemistry and Physics of Polycarbonates, Interscience Publishers, New York 1964, S. 28 ff; S. 102 ff" , und in "D. G. Legrand, J. T. Bendler, Handbook of Polycarbonate Science and Technology, Marcel Dekker New York 2000, S. 72 ff." beschrieben.

In einer Ausführungsform kann der Siloxanblock folgende Struktur (4) haben 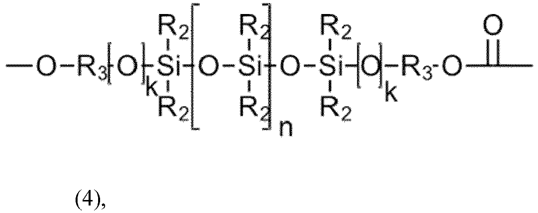
wobei R2 die oben genannte Bedeutung hat,
n eine durchschnittliche Zahl von 10 bis 400, bevorzugt 10 bis 100, besonders bevorzugt 15 bis 50, ist,
k für 0 oder 1 steht.
R3 umfasst unabhängig voneinander folgende Strukturelemente (5) oder (6): 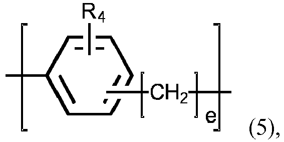
wobei R4 unabhängig voneinander Wasserstoff, Halogen und/oder jeweils ein C₁- bis C₁₀-, bevorzugt C₁- bis C₄-, linearer oder verzweigter, unsubstituierter oder ein- bis vierfach substituierter Alkylrest oder Alkoxyrest ist, bevorzugt sind die Alkyl- und Alkoxyreste unsubstituiert, insbesondere bevorzugt ist R4 Wasserstoff,
e 0 oder eine natürliche Zahl von 2 bis 12, bevorzugt 2 bis 6, ist, wobei im Falle, dass e gleich 0 ist, k gleich 1 ist, 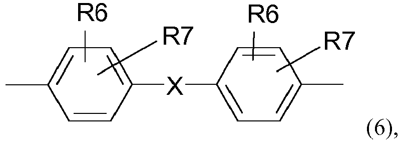
wobei R6, R7 und X die bei Formel (3a) angegebene Bedeutungen haben.

Beispielsweise und bevorzugt kann der Siloxanblock folgende Strukturen umfassen 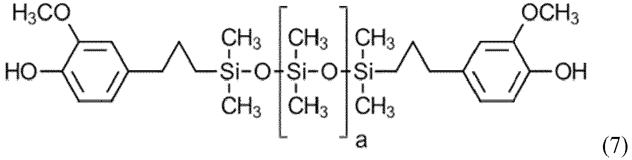 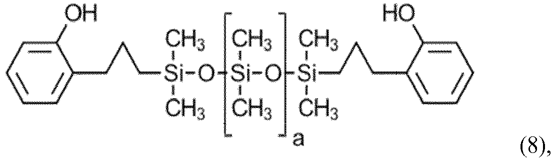 wobei a in Formel (7) und (8) für eine durchschnittliche Zahl von 10 bis 400, bevorzugt 10 bis 100 und besonders bevorzugt für 15 bis 50, steht.

In einer weiteren Ausführungsform können die oben genannten Siloxanblöcke einfach oder mehrfach über Terephthalsäure oder Isophthalsäure verknüpft sein zu folgenden beispielhaft gezeigten Strukturelementen 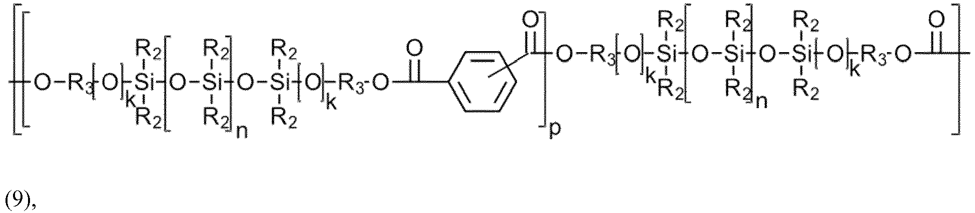
wobei p für 0 oder 1 steht,
R2, R3, n und k die oben bei dem Strukturelement (4) angegebene Bedeutung haben.

Entsprechende Siloxanblöcke zur Umsetzung mit Polycarbonat oder zur Umsetzung mit Dihydroxyarylverbindungen, abgeleitet von der Formel (3) oder (3a) mit Phosgen oder Diarylcarbonaten, weisen jeweils terminal phenolische OH-Gruppen auf, d.h. 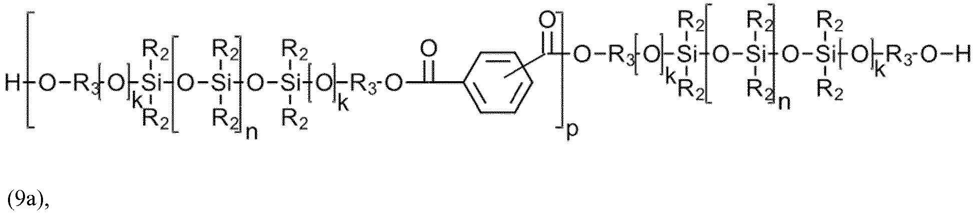 wobei R2, R3, n, k und p die bei dem Strukturelement (9) angegebene Bedeutungen haben.

Insbesondere bevorzugt sind hydroxyarylterminierte (Poly)Siloxane der Formel (10)

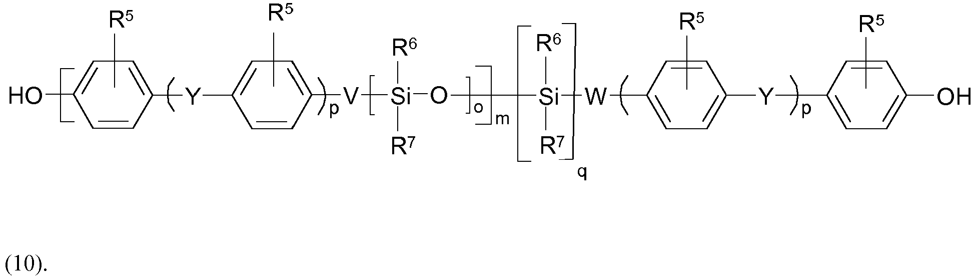

In der allgemeinen Formel (10) steht R⁵ für Wasserstoff oder C₁- bis C₄-Alkyl, C₁- bis C₄-Alkoxy, vorzugsweise für Wasserstoff oder Methyl, Methyloxy, besonders bevorzugt für Wasserstoff.

R⁶ und R⁷ stehen unabhängig voneinander für Aryl, bevorzugt Phenyl, C₁- bis C₄-Alkyl, vorzugsweise für Methyl, insbesondere für Methyl.

Y steht für eine Einfachbindung, -CO-, -O-, C₁- bis C₅-Alkylen, C₂- bis C₅-Alkyliden oder für einen C₅- bis C₆-Cycloalkylidenrest, der ein- oder mehrfach mit C₁- bis C₄-Alkyl substituiert sein kann, bevorzugt für eine Einfachbindung, -O-, Isopropyliden oder für einen C₅- bis C₆-Cycloalkylidenrest, der ein- oder mehrfach mit C₁- bis C₄-Alkyl substituiert sein kann, und insbesondere für Isopropyliden.

V steht für Sauerstoff, C₁- bis C₆-Alkylen oder C₂- bis C₅-Alkyliden, bevorzugt für eine Einfachbindung, Sauerstoff, C₃-Alkylen oder Isopropyliden, insbesondere Sauerstoff oder Isopropyliden.

W steht für eine Einfachbindung, S, C₁- bis C₆-Alkylen oder C₂- bis C₅-Alkyliden, bevorzugt für eine Einfachbindung, C₃-Alkylen oder Isopropyliden, wobei W keine Einfachbindung ist, wenn q für 1 steht.
p und q stehen unabhängig voneinander jeweils für 0 oder 1.
o steht für eine durchschnittliche Anzahl von Wiederholungseinheiten von 10 bis 400, bevorzugt 10 bis 100, besonders bevorzugt 15 bis 50.
m steht für eine für eine durchschnittliche Anzahl von Wiederholungseinheiten von 1 bis 10, bevorzugt 1 bis 6, besonders bevorzugt 1,5 bis 5.

Insbesondere bevorzugt sind Siloxane der Formeln (11) und/oder (12) 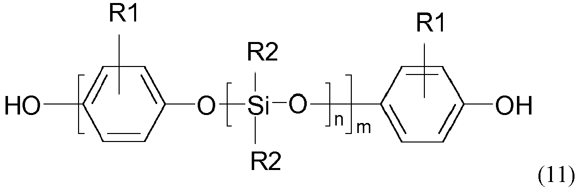 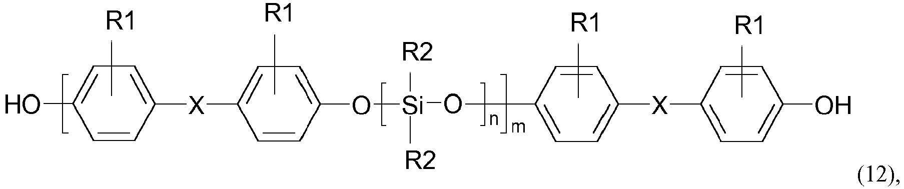
wobei R1 für Wasserstoff, Cl, Br, C₁- bis C₄-Alkyl, vorzugsweise für Wasserstoff oder Methyl steht und insbesondere bevorzugt für Wasserstoff,
R2 unabhängig voneinander für Aryl oder Alkyl, bevorzugt für Methyl,
X für eine Einfachbindung, -SO₂-, -CO-, -O-, -S-, C₁- bis C₆-Alkylen, C₂- bis C₅-Alkyliden oder für C₆- bis C₁₂-Arylen, welches gegebenenfalls mit weiteren Heteroatome enthaltenden aromatischen Ringen kondensiert sein kann, steht, X bevorzugt für eine Einfachbindung, C₁- bis C₅-Alkylen, C₂- bis C₅-Alkyliden, C₅- bis C₁₂-Cycloalkyliden, -O-, -SO- -CO-, -S-, -SO₂-, besonders bevorzugt für eine Einfachbindung, Isopropyliden, C5 bis C12 Cycloalkyliden oder Sauerstoff, und ganz besonders bevorzugt für Isopropyliden steht,
n eine durchschnittliche Zahl von 10 bis 400, bevorzugt 10 und 100, insbesondere bevorzugt 10 bis 50, bedeutet und
m für eine durchschnittliche Zahl von 1 bis 10, bevorzugt von 1 bis 6 und insbesondere bevorzugt von 1,5 bis 5, steht.

Das Molekulargewicht der Siloxankomponente beträgt bevorzugt 3.000 bis 20.000 g/mol, bestimmt mittels Gelpermeationschromatographie in Dichlormethan als Lösungsmittel und BPA (Bisphenol A)-Polycarbonat als Standard und insbesondere bevorzugt 3500 - 15.000 g/mol.

Die Herstellung der Siloxane der Formeln (10) bis (12) ist beispielsweise in DE 33 34 782 A1 und DE 19710081 A1 beschrieben.

Die Siloxankomponenten der Formel (10), (11) oder (12) werden von 0,5 bis 50 Gew.-%, bevorzugt von 1 bis 40 Gew.-%, insbesondere bevorzugt von 2 bis 20 % und ganz besonders bevorzugt von 2,5 bis 10 Gew.-%, jeweils bezogen auf die Komponente B, eingesetzt.

Die Herstellung der Siloxanblöcke ist prinzipiell bekannt und kann nach Verfahren, wie beispielsweise in US 20130267665 A1 beschrieben, hergestellt werden.

Ein erfindungsgemäß besonders bevorzugt eingesetztes Polysiloxan-Polycarbonat-Copolymer basiert auf Bisphenol A und Polydimethylsiloxan und enthält dabei 3 bis 7 Gew.-% Polydimethylsiloxan. Ganz besonders bevorzugt beträgt die MVR des Polysiloxan-Polycarbonat-Copolymers 10 bis 20 cm³/10 min (260°C/5 kg, ISO 1133-1:2011).

Die erfindungsgemäßen Zusammensetzungen enthalten das Polysiloxan-Polycarbonat-Copolymer in Mengen von 1 bis 15 Gew.-%, bevorzugt in Mengen von 2 bis 10 Gew.-%, besonders bevorzugt in Mengen von 7 bis 10 Gew.-%. Bevorzugt ist das Verhältnis der Menge an Komponente B in Gew.-%, bezogen auf die Gesamtzusammensetzung, zur BET-Oberfläche der Komponente A in m²/g > 1.

### Komponente C

Weitere aromatische Polycarbonate gemäß Komponente C im Sinne der vorliegenden Erfindung sind sowohl Homopolycarbonate als auch Copolycarbonate und/oder Polyestercarbonate; die Polycarbonate können in bekannter Weise linear oder verzweigt sein. Erfindungsgemäß können auch Mischungen von Polycarbonaten verwendet werden.

Die weiteren aromatischen Polycarbonate gemäß Komponente C schließen als Gruppe die Polysiloxan-Polycarbonat-Copolymere gemäß Komponente B aus.

Die thermoplastischen Polycarbonate, einschließlich der thermoplastischen, aromatischen Polyestercarbonate, haben bevorzugt gewichtsmittlere Molekulargewichte M_{w} von 15.000 g/mol bis 40.000 g/mol, weiter bevorzugt bis 34.000 g/mol, besonders bevorzugt von 17.000 g/mol bis 33.000 g/mol, insbesondere von 19.000 g/mol bis 32.000 g/mol, ermittelt durch Gelpermeationschromotographie, kalibriert gegen Bisphenol A-Polycarbonat Standards unter Verwendung von Dichlormethan als Elutionsmittel, Kalibrierung mit linearen Polycarbonaten (aus Bisphenol A und Phosgen) bekannter Molmassenverteilung der PSS Polymer Standards Service GmbH, Deutschland, Kalibrierung nach der Methode 2301-0257502-09D (aus dem Jahre 2009 in deutscher Sprache) der Currenta GmbH & Co. OHG, Leverkusen. Das Elutionsmittel ist Dichlormethan. Säulenkombination aus vernetzten Styrol-Divinylbenzolharzen. Durchmesser der analytischen Säulen: 7,5 mm; Länge: 300 mm. Partikelgrößen des Säulenmaterials: 3 µm bis 20 µm. Konzentration der Lösungen: 0,2 Gew.-%. Flussrate: 1,0 ml/min, Temperatur der Lösungen: 30°C. Verwendung einer UV- und/oder RI-Detektion.

Ein Teil, bis zu 80 Mol-%, vorzugsweise von 20 Mol-% bis zu 50 Mol-%, der Carbonat-Gruppen in den erfindungsgemäß eingesetzten Polycarbonaten können durch aromatische Dicarbonsäureester-Gruppen ersetzt sein. Derartige Polycarbonate, die sowohl Säurereste der Kohlensäure als auch Säurereste von aromatischen Dicarbonsäuren in die Molekülkette eingebaut enthalten, werden als aromatische Polyestercarbonate bezeichnet. Sie werden im Rahmen der vorliegenden Erfindung unter dem Oberbegriff der thermoplastischen, aromatischen Polycarbonate subsumiert.

Die Herstellung der Polycarbonate erfolgt in bekannter Weise aus Dihydroxyarylverbindungen, Kohlcnsäurcdcrivatcn, gegebenenfalls Kettenabbrechern und gegebenenfalls Verzweigern, wobei zur Herstellung der Polyestercarbonate ein Teil der Kohlensäurederivate durch aromatische Dicarbonsäuren oder Derivate der Dicarbonsäuren ersetzt wird, und zwar je nach Maßgabe der in den aromatischen Polycarbonaten zu ersetzenden Carbonatstruktureinheiten durch aromatische Dicarbonsäureesterstruktureinheiten.

Für die Herstellung von Polycarbonaten geeignete Dihydroxyarylverbindungen sind solche der Formel (13)

HO-Z-OH (13),

in welcher
- Z: ein aromatischer Rest mit 6 bis 30 C-Atomen ist, der einen oder mehrere aromatische Kerne enthalten kann, substituiert sein kann und aliphatische oder cycloaliphatische Reste bzw. Alkylaryle oder Heteroatome als Brückenglieder enthalten kann.

Bevorzugt steht Z in Formel (13) für einen Rest der Formel (14) 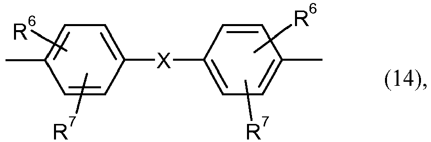 in der
- R⁶ und R⁷: unabhängig voneinander für H, C₁- bis C₁₈-Alkyl-, C₁- bis C₁₈-Alkoxy, Halogen wie Cl oder Br oder für jeweils gegebenenfalls substituiertes Aryl- oder Aralkyl, bevorzugt für H oder C₁- bis C₁₂-Alkyl, besonders bevorzugt für H oder C₁- bis C₈-Alkyl und ganz besonders bevorzugt für H oder Methyl stehen, und
- X: für eine Einfachbindung, -SO₂-, -CO-, -O-, -S-, C₁- bis C₆-Alkylen, C₂- bis C₅-Alkyliden oder C₅- bis C₆-Cycloalkyliden, welches mit C₁- bis C₆-Alkyl, vorzugsweise Methyl oder Ethyl, substituiert sein kann, ferner für C₆- bis C₁₂-Arylen, welches gegebenenfalls mit weiteren Heteroatome enthaltenden aromatischen Ringen kondensiert sein kann, steht.

Bevorzugt steht X für eine Einfachbindung, C₁- bis C₅-Alkylen, C₂- bis C₅-Alkyliden, C₅- bis C₆-Cycloalkyliden, -O-, -SO-, -CO-, -S-, -SO₂-
oder für einen Rest der Formel (15)

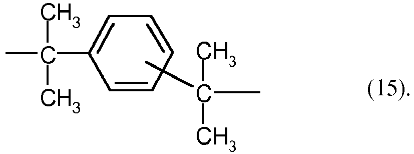

Beispiele für Dihydroxyarylverbindungen (Diphenole) sind: Dihydroxybenzole, Dihydroxydiphenyle, Bis-(hydroxyphenyl)-alkane, Bis-(hydroxyphenyl)-cycloalkane, Bis-(hydroxyphenyl)-aryle, Bis-(hydroxyphenyl)-ether, Bis-(hydroxyphenyl)-ketone, Bis-(hydroxyphenyl)-sulfide, Bis-(hydroxyphenyl)-sulfone, Bis-(hydroxyphenyl)-sulfoxide, 1,1'-Bis-(hydroxyphenyl)-diisopropylbenzole sowie deren kernalkylierte und kernhalogenierte Verbindungen.

Für die Herstellung der erfindungsgemäß zu verwendenden Polycarbonate und Copolycarbonate geeignete Dihydroxyarylverbindungen sind beispielsweise Hydrochinon, Resorcin, Dihydroxydiphenyl, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, a,a'-Bis-(hydroxyphenyl)-diisopropylbenzole sowie deren alkylierte, kernalkylierte und kernhalogenierte Verbindungen. Zur Herstellung von Copolycarbonaten können auch Si-haltige Telechele eingesetzt werden, sodass sogenannte Si-Copolycarbonate erhalten werden.

Bevorzugte Dihydroxyarylverbindungen sind 4,4'-Dihydroxydiphenyl, 2,2-Bis-(4-hydroxyphenyl)-1-phenylpropan, 1,1-Bis-(4-hydroxyphenyl)-phenylethan, 2,2-Bis-(4-hydroxyphenyl)propan, 2,4-Bis-(4-hydroxyphenyl)-2-methylbutan, 1,3-Bis-[2-(4-hydroxyphenyl)-2-propyl]benzol (Bisphenol M), 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propn, Bis-(3,5-dimethyl-4-hydroxyphenyl)-sulfon, 2,4-Bis-(3,5-dimethyl-4-hydroxyphenyl)-2-methylbutan, 1,3-Bis-[2-(3,5-dimethyl-4-hydroxyphenyl)-2-propyl]-benzol und 1,1-Bis-(4-hydroxyphenyl)-3,3,5-triamethylcyclohexan (Bisphenol TMC) sowie die Bisphenole der Formeln (I) bis (III) 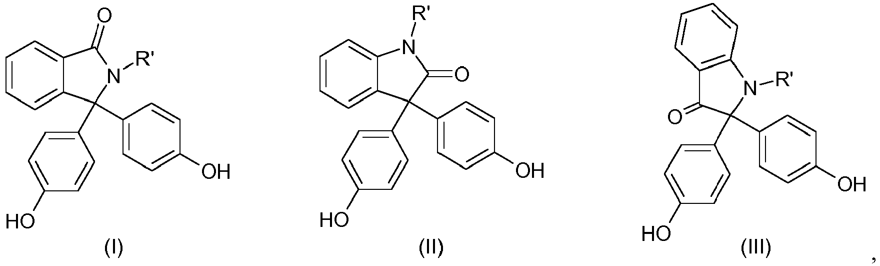 in denen R' jeweils für einen C₁- bis C₄-Alkylrest, Aralkylrest oder Arylrest, bevorzugt für einen Methylrest oder Phenylrest, ganz besonders bevorzugt für einen Methylrest, steht.

Besonders bevorzugte Dihydroxyarylverbindungen sind 4,4'-Dihydroxydiphenyl, 1,1-Bis-(4-hydroxyphenyl)-phenyl-ethan, 2,2-Bis-(4-hydroxyphenyl)-propan, 2,2-Bis(3,5-dimethyl-4-hydroxyphenyl)-propan, 1,1-Bis-(4-hydroxyphenyl)-cyclohexan und 1,1-Bis-(4-hydroxyphenyl)-3,3,5-trimethylcyclohexan (Bisphenol TMC) sowie die Dihydroxyarylverbindungen der Formeln (I), (II) und/oder (III).

Diese und weitere geeignete Dihydroxyarylverbindungen sind z.B. in US 2 999 835 A, 3 148 172 A, 2 991 273 A, 3 271 367 A, 4 982 014 A und 2 999 846 A, in den deutschen Offenlegungsschriften 1 570 703 A, 2 063 050 A, 2 036 052 A, 2 211 956 A und 3 832 396 A, der französischen Patentschrift 1 561 518 A1, in der Monographie "H. Schnell, Chemistry and Physics of Polycarbonates, Interscience Publishers, New York 1964, S. 28 ff; S.102 ff.", und in "D.G. Legrand, J.T. Bendler, Handbook of Polycarbonate Science and Technology, Marcel Dekker New York 2000, S. 72ff." beschrieben.

Im Falle der Homopolycarbonate wird nur eine Dihydroxyarylverbindung eingesetzt, im Falle von Copolycarbonaten werden zwei oder mehr Dihydroxyarylverbindungen eingesetzt.

Besonders bevorzugte Polycarbonate sind das Homopolycarbonat auf Basis von Bisphenol A, das Homopolycarbonat auf Basis von 1,1-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan beziehungsweise der beiden Monomere Bisphenol A und 4,4'-Dihydroxydiphenyl, sowie von den Dihydroxyarylverbindungen der Formeln (I), (II) und/oder (III) 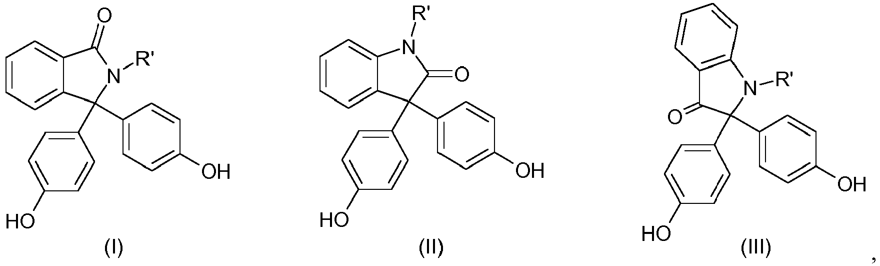 in denen R' jeweils für C₁- bis C₄-Alkyl, Aralkyl oder Aryl, bevorzugt für Methyl oder Phenyl, ganz besonders bevorzugt für Methyl, steht,
abgeleitete Homo- oder Copolycarbonate, insbesondere mit Bisphenol A. Äußerst bevorzugt ist das Homopolycarbonat auf Basis von Bisphenol A ("Bisphenol A-basiertes Polycarbonat").

Die verwendeten Dihydroxyarylverbindungen, wie auch alle anderen der Synthese zugesetzten Chemikalien und Hilfsstoffe, können mit den aus ihrer eigenen Synthese, Handhabung und Lagerung stammenden Verunreinigungen kontaminiert sein. Es ist jedoch wünschenswert, mit möglichst reinen Rohstoffen zu arbeiten.

Die zur Regelung des Molekulargewichtes benötigten monofunktionellen Kettenabbrecher, wie Phenole oder Alkylphenole, insbesondere Phenol, p-tert. Butylphenol, iso-Octylphenol, Cumylphenol, deren Chlorkohlensäureester oder Säurechloride von Monocarbonsäuren bzw. Gemische aus diesen Kettenabbrechern, werden entweder mit dem Bisphenolat bzw. den Bisphenolaten der Reaktion zugeführt oder aber zu jedem beliebigen Zeitpunkt der Synthese zugesetzt, solange im Reaktionsgemisch noch Phosgen oder Chlorkohlensäureendgruppen vorhanden sind, bzw. im Falle der Säurechloride und Chlorkohlensäureester als Kettenabbrecher, solange genügend phenolische Endgruppen des sich bildenden Polymers zur Verfügung stehen. Vorzugsweise werden der oder die Kettenabbrecher jedoch nach der Phosgenierung an einem Ort oder zu einem Zeitpunkt zugegeben, wenn kein Phosgen mehr vorliegt, aber der Katalysator noch nicht dosiert wurde, bzw. sie werden vor dem Katalysator, mit dem Katalysator zusammen oder parallel zudosiert.

In der gleichen Weise werden eventuell zu verwendende Verzweiger oder Verzweigermischungen der Synthese zugesetzt, üblicherweise jedoch vor den Kettenabbrechern. Üblicherweise werden Trisphenole, Quarterphenole oder Säurechloride von Tri- oder Tetracarbonsäuren verwendet oder auch Gemische der Polyphenole oder der Säurechloride.

Einige der als Verzweiger verwendbaren Verbindungen mit drei oder mehr als drei phenolischen Hydroxylgruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tris-(4-hydroxyphenyl)-benzol, 1,1,1-Tri-(4-hydroxyphenyl)-ethan, Tris-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, Tetra-(4-hydroxyphenyl)-methan.

Einige der sonstigen trifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Bevorzugte Verzweiger sind 3,3-Bis-(3-methyl-4-hydroxyphenyl)-2-oxo-2,3-dihydroindol und 1,1,1-Tri-(4-hydroxyphenyl)-ethan.

Die Menge der gegebenenfalls einzusetzenden Verzweiger beträgt 0,05 Mol-% bis 2 Mol-%, bezogen wiederum auf Mole an jeweils eingesetzten Dihydroxyarylverbindungen.

Die Verzweiger können entweder mit den Dihydroxyarylverbindungen und den Kettenabbrechern in der wässrigen alkalischen Phase vorgelegt werden oder in einem organischen Lösungsmittel gelöst vor der Phosgenierung zugegeben werden.

Alle diese Maßnahmen zur Herstellung der Polycarbonate sind dem Fachmann geläufig.

Für die Herstellung der Polyestercarbonate geeignete aromatische Dicarbonsäuren sind beispielsweise Orthophthalsäure, Terephthalsäure, Isophthalsäure, tert-Butylisophthalsäure, 3,3'-Diphenyldicarbonsäure, 4,4'-Diphenyldicarbonsäure, 4,4-Benzophenondicarbonsäure, 3,4'-Benzophenondicarbonsäure, 4,4'-Diphenyletherdicarbonsäure, 4,4'-Diphenylsulfondicarbonsäure, 2,2-Bis-(4-carboxyphenyl)-propan, Trimethyl-3-phenylindan-4,5'-dicarbonsäure. Von den aromatischen Dicarbonsäuren werden besonders bevorzugt die Terephthalsäure und/oder Isophthalsäure eingesetzt. Derivate der Dicarbonsäuren sind die Dicarbonsäuredihalogenide und die Dicarbonsäuredialkylester, insbesondere die Dicarbonsäuredichloride und die Dicarbonsäuredimethylester.

Der Ersatz der Carbonatgruppen durch die aromatischen Dicarbonsäureestergruppen erfolgt im Wesentlichen stöchiometrisch und auch quantitativ, so dass das molare Verhältnis der Reaktionspartner sich auch im fertigen Polyestercarbonat wiederfindet. Der Einbau der aromatischen Dicarbonsäureestergruppen kann sowohl statistisch als auch blockweise erfolgen.

Bevorzugte Herstellungsweisen der erfindungsgemäß zu verwendenden Polycarbonate, einschließlich der Polyestercarbonate, sind das bekannte Grenzflächenverfahren und das bekannte Schmelzeumesterungsverfahren (vgl. z. B. WO 2004/063249 A1, WO 2001/05866 A1, US 5,340,905 A, US 5,097,002 A, US-A 5,717,057 A).

Im ersten Fall dienen als Säurederivate vorzugsweise Phosgen und gegebenenfalls Dicarbonsäuredichloride, im letzteren Fall vorzugsweise Diphenylcarbonat und gegebenenfalls Dicarbonsäurediester. Katalysatoren, Lösungsmittel, Aufarbeitung, Reaktionsbedingungen etc. für die Polycarbonatherstellung bzw. Polyestercarbonatherstellung sind in beiden Fällen hinreichend beschrieben und bekannt.

Thermoplastische Zusammensetzungen i.S. der Erfindung, welche auf aromatischem Polycarbonat basieren, enthalten als überwiegend vorhandene Komponente aromatisches Polycarbonat. "Überwiegend" bedeutet hierbei mindestens 71 Gew.-%, bevorzugt mindestens 70 Gew.-%, weiter bevorzugt mindestens 74 Gew.-%, besonders bevorzugt mindestens 78 Gew.-% aromatisches Polycarbonat, bezogen auf die Gesamtzusammensetzung. Diese Mengenangaben betreffen jeweils die Summe aus Polysiloxan-Polycarbonat-Copolymer gemäß Komponente B und weiterem aromatischem Polycarbonat gemäß Komponente C.

Die erfindungsgemäßen Zusammensetzungen enthalten mindestens 56 Gew.-% weiteres aromatisches Polycarbonat neben Komponente B, bevorzugt mindestens 68 Gew.-%.

### Komponente D

Die erfindungsgemäßen Zusammensetzungen können zudem weitere Additive enthalten. Weitere Additive sind kein Quarz und/oder Quarzglas mit einem D₅₀, bestimmt mittels Laserbeugung nach ISO 13320:2009-10, von mindestens 2,0 µm und auch kein Polysiloxan-Polycarbonat-Copolymer, welches bereits als Komponente B genannt ist.

Die Additive sind optional (0 Gew.-%), bevorzugt bis zu 20,0 Gew.-%, weiter bevorzugt bis zu 10,0 Gew.-%, noch weiter bevorzugt zu 0,10 bis 8,0 Gew.-%, besonders bevorzugt zu 0,2 bis 3,0 Gew.-% in der erfindungsgemäßen Zusammensetzung enthalten, wobei sich diese Gewichtsprozente auf das Gesamtgewicht der Zusammensetzung beziehen.

Solche Additive, wie sie üblicherweise Polycarbonaten zugesetzt werden, sind beispielsweise in EP 0 839 623 A1, WO 96/15102 A2, EP 0 500 496 A1 oder im "Plastics Additives Handbook", Hans Zweifel, 5th Edition 2000, Hanser Verlag, München beschrieben. Geeignete Additive sind insbesondere Flammschutzmittel, Antitropfmittel, von Komponente A verschiedene Füllstoffe, Antistatika, organische und anorganische Farbmittel einschließlich Pigmenten und Ruß, Gleit- und/oder Entformungsmittel, Thermostabilisatoren, Verträglichkeitsvermittler, UV-Absorber, IR-Absorber und/oder Blendpartner.

Bevorzugt enthalten die erfindungsgemäßen Zusammensetzungen jedoch kein PMMA.

Weiter bevorzugt enthalten die erfindungsgemäßen Zusammensetzungen auch keine Polyester.

Bevorzugte Entformungsmittel sind Ester aliphatischer langkettiger Carbonsäuren mit ein- oder mehrwertigen aliphatischen und/oder aromatischen Hydroxyverbindungen. Besonders bevorzugt sind Pentaerythrittetrastearat, Glycerinmonostearat, Stearylstearat und Propandioldistearat, bzw. Gemische daraus.

Bevorzugte UV-Stabilisatoren weisen eine möglichst geringe Transmission unterhalb 400 nm und eine möglichst hohe Transmission oberhalb von 400 nm auf. Für den Einsatz in der erfindungsgemäßen Zusammensetzung besonders geeignete Ultraviolett-Absorber sind Benzotriazole, Triazine, Benzophenone und/oder arylierte Cyanoacrylate.

Besonders geeignete Ultraviolett-Absorber sind Hydroxy-Benzotriazole, wie 2-(3',5'-Bis-(1,1-dimethylbenzyl)-2'-hydroxy-phenyl)-benzotriazol (Tinuvin^{®} 234, BASF Schweiz AG), 2-(2'-Hydroxy-5'-(tert.-octyl)-phenyl)-benzotriazol (Tinuvin^{®} 329, BASF Schweiz AG), 2-(2'-Hydroxy-3'-(2-butyl)-5'-(tert.butyl)-phenyl)-benzotriazol (Tinuvin^{®} 350, BASF Schweiz AG), Bis-(3-(2H-benztriazolyl)-2-hydroxy-5-tert.-octyl)methan, (Tinuvin^{®} 360, BASF Schweiz AG), (2-(4,6-Diphenyl-1,3,5-triazin-2-yl)-5-(hexyloxy)-phenol (Tinuvin^{®} 1577, BASF Schweiz AG), sowie der Benzophenone 2,4-Dihydroxy-benzophenon (Chimasorb^{®} 22, BASF Schweiz AG) und 2-Hydroxy-4-(octyloxy)-benzophenon (Chimassorb^{®} 81, BASF Schweiz AG), 2-Cyano-3,3-diphenyl-2-propensäure-2-ethylhexylester, 2,2-Bis[[(2-cyano-1-oxo-3,3-diphenyl-2-propenyl)oxy]-methyl]-1,3-propandiylester (9CI) (Uvinul^{®} 3030, BASF SE, Ludwigshafen), 2-[2-Hydroxy-4-(2-ethylhexyl)oxy]phenyl-4,6-di(4-phenyl)phenyl-1,3,5-triazin (CGX UVA 006, BASF Schweiz AG) oder Tetraethyl-2,2'-(1,4-phenylen-dimethyliden)-bismalonat (Hostavin^{®} B-Cap, Clariant AG).

Besonders bevorzugte spezielle UV-Stabilisatoren sind beispielsweise Tinuvin^{®} 360, Tinuvin^{®} 350, Tinuvin^{®} 329, Hostavin^{®} B-CAP, besonders bevorzugt TIN 329 und Hostavin^{®} B-Cap. Es können auch Mischungen dieser Ultraviolett-Absorber eingesetzt werden.

Sofern UV-Absorber enthalten sind, enthält die Zusammensetzung bevorzugt Ultraviolett-Absorber in einer Menge von 0 ppm bis 6000 ppm, weiter bevorzugt 500 ppm bis 5000 ppm, noch weiter bevorzugt 1000 ppm bis 2000 ppm, bezogen auf die Gesamtzusammensetzung.

Geeignete IR-Absorber sind beispielsweise in EP 1 559 743 A1, EP 1 865 027 A1, DE 10022037 A1, DE 10006208 A1 sowie in den italienischen Patentanmeldungen RM2010A000225, RM2010A000227 sowie RM2010A000228 offenbart. Von den in der zitierten Literatur genannten IR-Absorbern sind solche auf Borid- und Wolframatbasis, insbesondere Cäsiumwolframat oder Zink-dotiertes Cäsiumwolframat, sowie auf ITO und ATO basierende Absorber sowie Kombinationen daraus bevorzugt.

Geeignete Farbmittel können Pigmente, organische und anorganische Pigmente, Ruß und/oder Farbstoffe sein. Farbmittel oder Pigmente im Sinne der vorliegenden Erfindung sind Schwefelhaltige Pigmente wie Cadmiumrot oder Cadmiumgelb, Eisencyanid-basierte Pigmente wie Berliner Blau, Oxid-Pigmente wie Titandioxid, Zinkoxid, rotes Eisenoxid, schwarzes Eisenoxid, Chromoxid, Titangelb, Zink-Eisen-basiertes Braun, Titan-Cobalt-basiertes Grün, Cobaltblau, Kupfer-Chrom-basiertes Schwarz und Kupfer-Eisen-basiertes Schwarz oder Chrom-basierte Pigmente wie Chromgelb, Phthalocyanin-abgeleitete Farbstoffe wie Kupfer-Phthalocyanin-Blau oder Kupfer-Phthalocyanin-Grün, kondensierte polycyclische Farbstoffe und Pigmente wie Azobasierende (z. B. Nickel-Azogelb), Schwefel-Indigo-Farbstoffe, Perinon-basierte, Perylen-basierte, Chinacridon-abgeleitete, Dioxazin-basierte, Isoindolinon-basierte und Chinophthalon-abgeleitete Derivate, Anthrachinon-basierte, heterocyclische Systeme.

Konkrete Beispiele für Handclsproduktc sind z. B. MACROLEX^{®} Blau RR, MACROLEX^{®} Violett 3R, MACROLEX^{®} Violett B (Lanxess AG, Deutschland), Sumiplast^{®} Violett RR, Sumiplast^{®} Violett B, Sumiplast^{®} Blau OR, (Sumitomo Chemical Co., Ltd.), Diaresin^{®} Violett D, Diaresin^{®} Blau G, Diaresin^{®} Blau N (Mitsubishi Chemical Corporation), Heliogen^{®} Blau oder Heliogen^{®} Grün (BASF AG, Deutschland). Von diesen sind Cyaninderivate, Chinolinderivate, Anthrachinonderivate, Phthalocyaninderivate bevorzugt.

Füllstoffe verschieden von Komponente A können ebenfalls zugesetzt werden, sofern sie nach Art und Menge das Eigenschaftsniveau der vorliegenden Erfindung nicht beeinträchtigen. In Frage kommen hierfür prinzipiell alle feinvermahlenen organischen und anorganischen Materialien. Diese können z.B. partikel-, schuppenförmigen oder faserförmigen Charakter haben. Beispielhaft seien an dieser Stelle Kreide, Talk, Titandioxid, Silikate/Aluminosilikate wie z.B. Wollastonit, Glimmer/Tonschichtmineralien, Montmorillonit, insbesondere auch in einer durch Ionenaustausch modifizierten, organophilen Form, Kaolin, Zeolithe, Vermiculit sowie Aluminiumoxid, Glasfasern, Carbonfasern, Magnesiumhydroxid und Aluminiumhydroxid genannt. Es können auch Mischungen verschiedener anorganischer Materialien zum Einsatz kommen. Als anorganische Füllstoffe kommen insbesondere Titandioxid, im Allgemeinen in einer Menge von 0 bis 2,5 Gew.-%, bezogen auf die Summe der Gesamtzusammensetzung, oder Bariumsulfat in Betracht.

Die erfindungsgemäße Zusammensetzung ist bevorzugt frei von Polytetrafluorethylen (PTFE), besonders bevorzugt enthält die Zusammensetzung überhaupt kein Antidrippingmittel.

Die Zusammensetzung enthält bevorzugt außerdem maximal 0,4 Gew.-% Flammschutzmittel - unabhängig von dem Polysiloxan-Polycarbonat-Copolymer. Weiter bevorzugt sind überhaupt keine Flammschutzmittel enthalten.

Die erfindungsgemäße Zusammensetzung enthält bevorzugt maximal 14 Gew.-% Polycyclohexylendimethylenterephthalat (PCT), weiter bevorzugt ist sie frei von Polycyclohexylendimethylenterephthalat.

Die Zusammensetzung ist bevorzugt frei von Polyestern und/oder Pfropfpolymerisaten.

Unter "Pfropfpolymerisaten" werden insbesondere Pfropfpolymerisate mit kautschukelastischen Eigenschaften verstanden, die im Wesentlichen aus mindestens zwei der nachfolgenden Monomere erhältlich sind: Chloropren, 1,3-Butadien, Isopren, Styrol, Acrylnitril, Ethylen, Propylen, Vinylacetat und (Meth)Acrylsäureester mit 1 bis 18 C-Atomen in der Alkoholkomponente; also Polymerisate, wie sie z.B. in "Methoden der Organischen Chemie" (Houben-Weyl), Bd. 14/1, Georg Thieme-Verlag, Stuttgart 1961, S. 393-406 und in C.B. Bucknall, "Toughened Plastics", Appl. Science Publishers, London 1977, beschrieben sind. Pfropfpolymerisate können partiell vernetzt sein und Gelgehalte (gemessen in Toluol) von über 20 Gew.-% aufweisen, vorzugsweise über 40 Gew.-%, insbesondere über 60 Gew.-%, wobei der Gelgehalt bei 25°C in einem geeigneten Lösungsmittel bestimmt wird (M. Hoffmann, H. Krömer, R. Kuhn, Polymeranalytik I und II, Georg Thieme-Verlag, Stuttgart 1977).

Pfropfpolymerisate sind beispielsweise Pfropfpolymerisate aus:
a.i) 5 bis 95 Gew.-Teile, vorzugsweise 30 bis 80 Gew.-Teile, einer Mischung aus
a.i.1) 50 bis 95 Gew.-Teilen Styrol, α-Methylstyrol, methylkemsubstituiertem Styrol, C₁- bis C₈-Alkylmethacrylat, insbesondere Methylmethacrylat, C₁- bis C₈-Alkylacrylat, insbesondere Methylacrylat, oder Mischungen dieser Verbindungen
   und
a.i.2) 5 bis 50 Gew.-Teilen Acrylnitril, Methacrylnitril C₁- bis C₈-Alkylmethacrylaten, insbesondere Methylmethacrylat, C₁- bis C₈-Alkylacrylat, insbesondere Methylacrylat, Maleinsäureanhydrid, C₁- bis C₄-Alkyl- bzw. -Phenyl-N-substituierte Maleinimide oder Mischungen dieser Verbindungen auf
a.ii) 5 bis 95 Gew.-Teile, vorzugsweise 20 bis 70 Gew.-Teilen einer kautschukhaltigen Pfropfgrundlage.

Pfropfpolymere sind insbesondere solche mit einer Pfropfgrundlage auf Basis eines Polybutadienkautschuks.

Pfropfpolymerisate sind z.B. mit Styrol und/oder Acrylnitril und/oder (Meth-)Acrylsäurealkylestern gepfropfte Polybutadiene, Butadien/Styrol-Copolymerisate und Acrylatkautschuke; d.h. Copolymerisate der in der DEOS 1 694 173 (= US-PS 3 564 077) beschriebenen Art; mit Acryl- oder Methacrylsäurealkylestern, Vinylacetat, Acrylnitril, Styrol und/oder Alkylstyrolen gepfropfte Polybutadiene, Butadien/Styrol- oder Butadien/Acrylnitril-Copolymerisate, Polyisobutene oder Polyisoprene, wie sie z.B. in der DE-OS 2 348 377 (= US-PS 3 919 353) beschrieben sind.

Pfropfpolymerisate sind insbesondere auch solche, die durch Pfropfreaktion von
I. mindestens einem (Meth-)Acrylsäureester oder einem Gemisch aus Acrylnitril oder (Meth-) Acrylsäureester und Styrol auf
II. einem Butadien-Polymerisat mit Butadienresten als Pfropfgrundlage
erhältlich sind.

(Meth-)Acrylsäureester I sind Ester der Acrylsäure oder Methacrylsäure und einwertiger Alkohole mit 1 bis 18 C-Atomen, insbesondere Methacrylsäuremethylester, -ethylester und -propylester.

Die Pfropfgrundlage II kann neben Butadienresten auch Reste anderer ethylenisch ungesättigter Monomerer, wie Styrol, Acrylnitril, Ester der Acryl- oder Methacrylsäure mit 1 bis 4 C-Atomen in der Alkoholkomponente (wie Methylacrylat, Ethylacrylat, Methylmethacrylat, Ethylmethacrylat), Vinylester und/oder Vinylether enthalten. Eine Pfropfgrundlage II besteht beispielsweise aus reinem Polybutadien.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten B auch solche Produkte verstanden, die durch Polymerisation der Pfropfmonomeren in Gegenwart der Pfropfgrundlage gewonnen werden.

Pfropfpolymerisate sind z.B. auch Pfropfpolymerisate aus
(a) Acrylatkautschuk als Pfropfgrundlage und
(b) einem polymerisierbaren, ethylenisch ungesättigten Monomeren, dessen bzw. deren in Abwesenheit von a) entstandenen Homo- bzw. Copolymerisate als Pfropfmonomere.

Die Acrylatkautschuke (a) des Pfropfpolymerisats sind insbesondere Polymerisate aus Acrylsäurealkylestern, gegebenenfalls mit anderen polymerisierbaren, ethylenisch ungesättigten Monomeren.

Polymerisierbare Acrylsäureester sind C₁- bis C₈-Alkylester, beispielsweise Methyl-, Ethyl-, n-Butyl-, n-Octyl- und 2-Ethylhexylester sowie Mischungen dieser Monomeren.

Zur Vernetzung können Monomere mit mehr als einer polymerisierbaren Doppelbindung copolymerisiert werden.

Beispiele für vernetzende Monomere sind Ester ungesättigter Monocarbonsäuren mit 3 bis 8 C-Atomen und ungesättigter einwertiger Alkohole mit 3 bis 12 C-Atomen oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Bevorzugte "andere" polymerisierbare, ethylenisch ungesättigte Monomere, die neben den Acrylsäureestern gegebenenfalls zur Herstellung der Pfropfgrundlage (a) dienen können, sind z.B. Acrylnitril, Styrol, α-Methylstyrol, Acrylamide, Vinyl-C₁- bis -C₆-alkylether, Methylmethacrylat, Butadien.

Beispiele für entsprechende Impact Modifier sind ABS (Acrylnitril-Butadien-Styrol), SBR (StyrolButadien-Rubber) und SAN (Styrol-Acrylnitril).

Impact Modifier sind auch Vinyl(co)polymerisate.

Pfropfgrundlagen sind auch Silikonkautschuke.

Impact-Modifier sind auch Kern-Schale-Systeme, z.B. Silikon-Acryl-Schlagzähmodifizierer, etwa mit Silikonelastomer-Kern und MMA-Copolymer-Schale, wie Metablen S-2001.

Impact Modifier sind auch höhermolekulare, ggf. funktionalisierte, Polyolefine, sowohl Homo- als auch Copolymere, die von Komponente C) verschieden sind. Bei diesen erfolgt die Funktionalisierung z.B. mittels aromatischer Monovinyl-Monomere, Acrylsäuren bzw. Methacrylsäuren und/oder deren Estern, konjugierten Dienen.

Als Impact Modifier üblicherweise verwendete Polyester sind im weitesten Sinne als Kondensate aus Dicarbonsäuren und Diolen (Dialkoholen) darstellbar, insbesondere Polyethylenterephthalat, Polybutylenterephthalat sowie Polyethylennaphthalat oder der Copolyester Tritan der Eastman Chemical Company.

Bevorzugt sind die erfindungsgemäßen Zusammensetzungen frei von jeglichem Impact Modifier. Aufgrund der Abwesenheit von Impact Modifiern haben die erfindungsgemäßen Zusammensetzungen bei guter Schlagzähigkeit eine gute Wärmeformbeständigkeit, welche sich z.B. in hohen HDT-Werten ausdrückt.

Bevorzugte erfindungsgemäße thermoplastische Zusammensetzungen bestehen aus
A) 10 bis 29 Gew.-% Quarz und/oder Quarzglas mit einem D₅₀, bestimmt mittels Laserbeugung nach ISO 13320:2009-10, von mindestens 2,0 µm,
B) 1 bis 15 Gew.-% Polysiloxan-Polycarbonat-Copolymer als aromatischem Polycarbonat,
C) mindestens 56 Gew.-% weiterem aromatisches Polycarbonat,
D) ggf. einem oder mehreren weiteren Additiven, ausgewählt aus der Gruppe, bestehend aus Flammschutzmitteln, Antitropfmitteln, von Komponente A verschiedenen Füllstoffen, Antistatika, organischen und anorganischen Farbmitteln einschließlich Pigmenten und Ruß, Gleit- und/oder Entformungsmitteln, Thermostabilisatoren, Verträglichkeitsvermittlern, UV-Absorbern, IR-Absorbern und/oder Blendpartnern.

Weiter bevorzugte erfindungsgemäße thermoplastische Zusammensetzungen bestehen aus
A) 10 bis 29 Gew.-% Quarz und/oder Quarzglas mit einem D₅₀, bestimmt mittels Laserbeugung nach ISO 13320:2009-10, von mindestens 2,0 µm,
B) 1 bis 15 Gew.-% Polysiloxan-Polycarbonat-Copolymer als aromatischem Polycarbonat,
C) mindestens 56 Gew.-% weiterem aromatisches Polycarbonat,
D) ggf. einem oder mehreren weiteren Additiven, ausgewählt aus der Gruppe, bestehend aus von Komponente A verschiedenen Füllstoffen, Antistatika, organischen und anorganischen Farbmitteln einschließlich Pigmenten und Ruß, Gleit- und/oder Entformungsmitteln, Thermostabilisatoren, Verträglichkeitsvermittlern, UV-Absorbern und/oder IR-Absorbern.

Besonders bevorzugte erfindungsgemäße thermoplastische Zusammensetzungen bestehen aus
A) 10 bis 22 Gew.-% Quarz und/oder Quarzglas mit einem D₅₀, bestimmt mittels Laserbeugung nach ISO 13320:2009-10, von mindestens 2,0 µm,
B) 1 bis 10 Gew.-% Polysiloxan-Polycarbonat-Copolymer als aromatischem Polycarbonat,
C) mindestens 68 Gew.-% weiterem aromatisches Polycarbonat,
D) ggf. einem oder mehreren weiteren Additiven, ausgewählt aus der Gruppe, bestehend aus von Komponente A verschiedenen Füllstoffen, Antistatika, organischen und anorganischen Farbmitteln einschließlich Pigmenten und Ruß, Gleit- und/oder Entformungsmitteln, Thermostabilisatoren, Verträglichkeitsvermittlern, UV-Absorbern und/oder IR-Absorbern.

Es versteht sich, dass in den Zusammensetzungen neben den Komponenten auch deren übliche Verunreinigungen Bestandteil sind. Es ist erfindungsgemäß bevorzugt, mit möglichst reinen Komponenten zu arbeiten.

Die Herstellung der erfindungsgemäßen Polymer-Zusammensetzungen, enthaltend die Komponenten A), B), C) und ggf. D) erfolgt mit gängigen Einarbeitungsverfahren durch Zusammenführung, Vermischen und Homogenisieren der einzelnen Bestandteile, wobei insbesondere die Homogenisierung bevorzugt in der Schmelze unter Einwirkung von Scherkräften stattfindet. Gegebenenfalls erfolgt das Zusammenführen und Vermischen vor der Schmelzehomogenisierung unter Verwendung von Pulvervormischungen. Es können auch Vormischungen aus Granulaten oder Granulaten und Pulvern mit den erfindungsgemäßen Zusätzen verwendet werden.

Insbesondere können hierbei die Komponenten und vorgenannten Additive der erfindungsgemäßen Zusammensetzungen durch bekannte Verfahren oder als Masterbatch eingebracht werden.

Die Verwendung von Masterbatchen ist insbesondere zum Einbringen der Additive bevorzugt, wobei insbesondere Masterbatche auf Basis der jeweiligen Polymermatrix verwendet werden.

In diesem Zusammenhang kann die Zusammensetzung in üblichen Vorrichtungen wie Schneckenextrudern (zum Beispiel Zweischneckenextruder, ZSK), Knetern, Brabender- oder Banbury-Mühlen zusammengeführt, vermischt, homogenisiert und anschließend extrudiert werden. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden.

Die Herstellung von Kunststoffformteilen aus den erfindungsgemäßen Zusammensetzungen kann vorzugsweise durch Spritzguss, Extrusion oder Rapid-Heat-cycle Moulding erfolgen.

Die erfindungsgemäßen Zusammensetzungen werden bevorzugt für die Herstellung von Spritzgussteilen verwendet. Ebenso bevorzugt werden die erfindungsgemäßen Zusammensetzungen für die Herstellung von Extrudaten verwendet. Spritzgussteile und Extrudate werden erfindungsgemäß verstanden als "Formteile".

Bei den erfindungsgemäßen Formteilen handelt es sich vorzugsweise um Elemente von Elektro-/Elektronikgehäusen, insbesondere von Haushaltsgeräten, Gehäuseteile von Smartphones oder Tablets, um Teile von Laptop-Covern, um Elemente für Autoinnenraumverkleidungen, Kofferschalen oder um Elemente von Möbeln.

### Beispiele

### Eingesetzte Komponenten:

### Polymere:

- **PC1:**: ist ein kommerziell erhältliches Polycarbonat auf Basis von Bisphenol A mit einer MVR von 19 cm³/10 min (300°C/1,2 kg, ISO 1133-1:2011) und einer Erweichungstemperatur (VST/B 120; ISO 306:2013) von 145°C (Makrolon^{®} 2408 der Covestro Deutschland AG).
- **Si-PCl:**: ist ein Copolycarbonat auf Basis von Bisphenol A und Polydimethylsiloxan (PDMS) (enthaltend einen Siloxanblock nach Formel (2)) mit einer MVR von 17 cm³/10 min (260°C/5 kg, ISO 1133-1:2011) und einer Erweichungstemperatur (VST/B 50; ISO 306:2013) von 142°C. Der Gehalt an Polydimethylsiloxan beträgt 5 Gew.-%.

### Füllstoffe:

- **F1:**: ist ein Quarzgut (SiO₂) der Firma Quarzwerke GmbH (50226 Frechen, Deutschland), welches unter dem Handelsnamen Amosil FW600 verfügbar ist (D₅₀ = 4 µm, D₉₈ = 13 µm, unbeschlichtet). Es handelt sich um ein gebranntes Siliciumdioxid, also Quarzglas, mit einem D₁₀/D₉₀-Verhältnis von ca. 1,5/10 [µm/µm] sowie einer spezifischen Oberfläche von ca. 6 m²/g, ermittelt nach DIN-ISO 9277:2014-01.
- **F2:**: ist ein Quarzgut (SiO₂) der Firma Quarzwerke GmbH (50226 Frechen, Deutschland), welches unter dem Handelsnamen Amosil FW300 verfügbar ist (D₅₀ = 7 µm, D₉₈ = 26 µm, unbeschlichtet). Es handelt sich um ein gebranntes Siliciumdioxid, also Quarzglas, mit einem D₁₀/D₉₀-Verhältnis von ca. 2/18 [µm/µm] sowie einer spezifischen Oberfläche von ca. 2,3 m²/g, ermittelt nach DIN-ISO 9277:2014-01.

### Durchführung:

Zur Herstellung der Polycarbonat-Zusammensetzungen wurde ein Doppelschneckenextruder verwendet. Die Verarbeitungstemperaturen lagen zwischen 270-300°C mit einer Drehzahl von 100 min⁻¹ bis 240 min⁻¹. Der jeweilige Füllstoff wurde über einen Seitenextruder zugeführt, wobei das Polycarbonat sowie das Polysiloxan-Polycarbonat-Copolymer und ein Pulver-Premix, der alle weiteren Additive enthielt, über den Haupteinzug zugegeben wurden.

Die Probenkörper wurden nach ausreichender Trocknung der Granulate mittels Spritzguss bei einer Verarbeitungstemperatur der Schmelze von 300°C und des Werkzeugs von 90°C hergestellt.

### Bestimmungsmethoden:

Der **Yellowness-Index** (Y.I.) wurde gemessen nach ASTM E313-10. Der Y.I. wurde nach D65,10° (Lichtart: D65/Beobachter: 10°) ausgewertet. Die vermessenen Proben hatten eine Geometrie von 6,0 mm × 4,0 mm × 4 mm.

Die **MVR** wurde gemessen nach ISO 1133-1:2011 mit einer Schmelzetemperatur von 300°C und einem Auflagegewicht von 1,2 kg.

Die **Vicat-Erweichungstemperatur** (VST/B/50) der Zusammensetzungen wurde gemessen an Prüfkörpern nach ISO 306:2013.

Die **Durchstoßkraft** und **-verformung** der Zusammensetzungen wurden gemessen an Prüfkörpern nach ISO 6603-2:2000.

### Kratzfestigkeit/Glanz:

Zur Verkratzung mit einem Crockmeter Modell 680 der Firma James Heal (in Anlehnung an die Norm DIN55654:2015-08; Auflagegewicht 22N, 22 mm × 22 mm Stempel, Baumwolltuch) und anschließender Glanzmessung mittels Glanzmessgerät Micro Tri Gloss der Firma BYK Gardner wurden die Platten (150 mm × 105 mm × 3 mm) auf eine Schablone gelegt (siehe Figur 1, Schablone zur Auflage auf das Crockmeter und zur Positionierung des Glanzmessgerätes). Das Glanzmessgerät wurde jeweils an vier Stellen, entlang der Platte, quer zur Spritzgussrichtung angesetzt. Der Oberflächenglanz wurde dann entlang der Richtung der Verkratzung gemessen.

Zur Bewertung der Kratzfestigkeit bzw. der Abriebfestigkeit wurden die Glanzwerte der Oberfläche gemessen. Dazu wurde die Probekörperoberfläche (an verschiedenen Stellen entlang der Verkratzung) einmal vor und einmal nach der Verkratzung vermessen. Hierbei gibt das Glanzmessgerät Werte ≥ 0 aus - sogenannte Glanzeinheiten (GU für engl. Gloss Unit). Die Differenz der Glanzeinheiten (ΔGlanz) vor und nach der Bearbeitung (Verkratzung) mit dem Reibmedium ist ein Maß für die Widerstandskraft der Oberfläche gegenüber mechanischem Verschleiß. Je nach Zusammensetzung der Materialien kann es vorkommen, dass die Glanzwerte nach der Verkratzung größer sind als die Ausgangswerte, insbesondere, wenn Platten mit einer matten Oberfläche (i. d. R. <70 GU) verwendet werden. Da sowohl eine Ab- als auch Zunahme des Oberflächenglanzes den Eindruck einer "Schädigung" der Oberfläche erweckt, wird nur die relative Glanzgradveränderung als ein generelles Maß für die Veränderung der Oberflächenstruktur betrachtet, d.h., je größer die ΔGlanz-Werte sind, desto stärker weicht die Oberflächenstruktur nach der Verkratzung vom Ausgangszustand ab - die Kratzfestigkeit ist geringer.

### Ergebnisse:

Für die vorliegenden Beispiele wurde eine Füllstoff-Konzentration von 20 Gew.-% gewählt, da dieses eine hervorragende Konzentration ist, um sowohl ausreichende Kratzfestigkeit bei guter Verstärkungswirkung zu erzielen und gleichzeitig die Schlagzähigkeit nicht zu stark zu erniedrigen. Der Füllstoffgehalt kann jedoch ohne Weiteres im Rahmen der erfindungsgemäßen Grenzen variiert werden und entsprechend positive Effekte können ebenfalls beobachtet werden

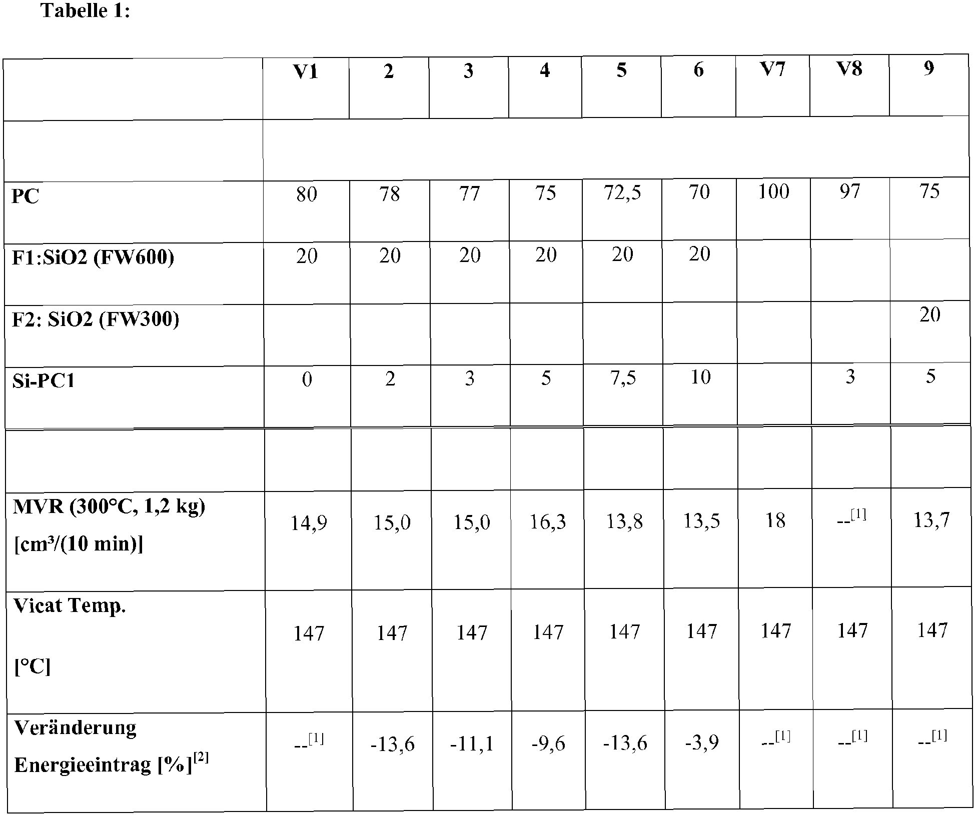

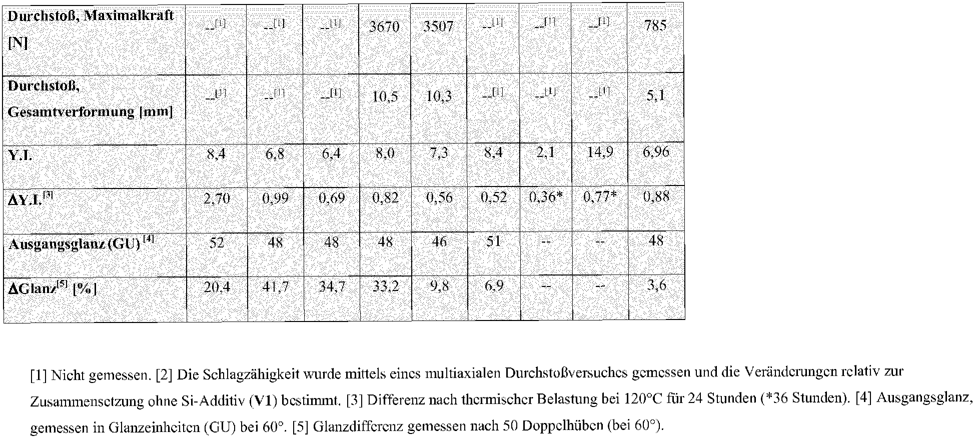

Das Vergleichsbeispiel 7 (reines Bisphenol A-basiertes Polycarbonat) dient als Referenz, um zu demonstrieren, dass das verwendete Polycarbonat einen niedrigen Y.I.-Ausgangswert hat und eine geringe Vergilbung zeigt.

Das Vergleichsbeispiel 8 (ohne SiO₂) zeigt, dass eine reine Mischung aus Bisphenol A-basiertem Polycarbonat und Si-PC1 einen hohen Y.1.-Wert von 14,9 aufweist, der durch Zugabe von SiO₂ erniedrigt werden kann (vgl. mit Bsp. 3)

Das erfindungsgemäße Beispiel 2 zeigt im Vergleich zu Vergleichsbeispiel 1, dass der Zusatz von Polysiloxan-Polycarbonat-Copolymer zu einer höheren thermische Stabilität führt, die sich in einer geringeren Vergilbung nach thermischer Belastung (ΔY.I.) zeigt. Vergleichsbeispiel 1 zeigt die niedrigste thermische Stabilität. Wie die erfindungsgemäßen Beispiele 2-6 demonstrieren, nimmt mit weiter steigendem Gehalt an Si-PC1 von 2 bis 10 Gew.-% der □Y.I.-Wert von 0,99 auf 0,52 ab, d.h. die thermische Stabilität nimmt immer weiter zu. Der Zusatz des Polysiloxan-Polycarbonat-Copolymers und die höhere thermische Stabilität gehen zunächst zu Lasten der Kratzfestigkeit (größere ΔY.I.-Werte). Mit dann steigendem Anteil an Polysiloxan-Polycarbonat-Copolymer nimmt dann aber die relative Glanzgradveränderung (□Glanz) von 41,7 auf 6,9 ab, die Kratzfestigkeit nimmt somit erheblich zu und ist gegenüber der Ausgangskratzfestigkeit des "nur" mit Quarzglas gefüllten Polycarbonats sogar deutlich verbessert. Einen besonders guten Einfluss auf Vergilbung und Oberflächenqualität erzielt man mit den Beispielen 5 und 6.

Bei gleichem Gehalt an Si-PC1 (5 Gew.-%) ist zwar bei Beispiel 9 der Y.I.-Wert geringer als bei Beispiel 4, □Y.I. ist allerdings etwas größer, die Verbesserung gegenüber V1 ist jedoch auch hier offensichtlich. Allerdings ist die Schlagzähigkeit der Zusammensetzung aus Beispiel 9, die gebranntes Siliciumdioxid mit größerer Partikelgröße enthält, gegenüber allen anderen Compounds deutlich erniedrigt.

Die relative Veränderung des Energieeintrages, hier gemessen anhand eines multiaxialen Durchstoß-Versuches, zeigt, dass die Schlagzähigkeit mit zunehmendem Gehalt an Polysiloxan-Polycarbonat-Copolymer etwa auf einem Niveau bleibt (Beispiele 2-5) und mit hohem Gehalt an Si-PC1 sogar noch deutlich besser wird (Beispiel 6).

Die Vicat-Temperatur bleibt unabhängig von den zugesetzten Komponenten auf einem konstant hohen Niveau.

## Patentansprüche

1. Thermoplastische Zusammensetzung, enthaltend
A) 10 bis 29 Gew.-% Quarz und/oder Quarzglas ,wobei der D₅₀ des Quarzes/Quarzglases, bestimmt mittels Laserbeugung nach ISO 13320:2009-10, mindestens 2,0 µm beträgt,
B) 1 bis 15 Gew.-% Polysiloxan-Polycarbonat-Copolymer als aromatisches Polycarbonat,
C) mindestens 56 Gew.-% weiteres aromatisches Polycarbonat.

2. Thermoplastische Zusammensetzung nach Anspruch 1, wobei der Quarz/das Quarzglas einen D₅₀, bestimmt mittels Laserbeugung nach ISO 13320:2009-10, von maximal 6 µm aufweist.

3. Thermoplastische Zusammensetzung nach Anspruch 1 oder 2, wobei der Quarz/das Quarzglas einen D₅₀, bestimmt mittels Laserbeugung nach ISO 13320:2009-10, von 3,5 bis 6,0 µm aufweist.

4. Thermoplastische Zusammensetzungen nach einem der vorhergehenden Ansprüche, wobei als Komponente A Quarzglas mit einem D₅₀, bestimmt mittels Laserbeugung nach ISO 13320:2009-10, von 3,5 bis 4,4 µm und einer spezifischen Oberfläche von 4 bis 8 m²/g, bestimmt nach DIN-ISO 9277:2014-01, enthalten ist.

5. Thermoplastische Zusammensetzung nach einem der vorhergehenden Ansprüche, wobei die Zusammensetzung frei von Polyestern und/oder Pfropfpolymerisaten ist.

6. Thermoplastische Zusammensetzung nach einem der vorhergehenden Ansprüche, wobei das Verhältnis der Menge an Komponente B in Gew.-%, bezogen auf die Gesamtzusammensetzung, zur BET-Oberfläche der Komponente A in m²/g > 1 ist.

7. Thermoplastische Zusammensetzung nach einem der vorhergehenden Ansprüche, wobei die Menge an Polysiloxan-Polycarbonat-Copolymer 2 bis 10 Gew.-% beträgt.

8. Thermoplastische Zusammensetzung nach einem der vorhergehenden Ansprüche, wobei die Menge an Polysiloxan-Polycarbonat-Copolymer 7 bis 10 Gew.-% beträgt.

9. Thermoplastische Zusammensetzung nach einem der vorhergehenden Ansprüche, wobei als Komponente B mindestens Copolycarbonat auf Basis von Bisphenol A und Polydimethylsiloxan enthalten ist, wobei der Anteil an Polydimethylsiloxan, bezogen auf dieses Copolycarbonat, 3 bis 7 Gew.-% beträgt.

10. Thermoplastische Zusammensetzung nach einem der vorhergehenden Ansprüche, wobei die Zusammensetzung mindestens 68 Gew.-% weiteres aromatisches Polycarbonat gemäß Komponente C, bis zu 10 Gew.-% Komponente B und bis zu 22 Gew.-% Komponente A enthält.

11. Thermoplastische Zusammensetzung nach einem der vorhergehenden Ansprüche, wobei neben der Komponente B als aromatisches Polycarbonat nur noch Bisphenol A-basiertes Polycarbonat enthalten ist.

12. Thermoplastische Zusammensetzung nach einem der Ansprüche 1 bis 9 oder 11, wobei die Zusammensetzung aus folgenden Komponenten besteht:
A) 10 bis 29 Gew.-% Quarz und/oder Quarzglas mit einem D₅₀, bestimmt mittels Laserbeugung nach ISO 13320:2009-10 von mindestens 2,0 µm,
B) 1 bis 15 Gew.-% Polysiloxan-Polycarbonat-Copolymer als aromatisches Polycarbonat,
C) mindestens 56 Gew.-% weiterem aromatischen Polycarbonat,
D) ggf. einem oder mehreren weiteren Additiven, ausgewählt aus der Gruppe, bestehend aus Flammschutzmitteln, Antitropfmitteln, von Komponente A verschiedenen Füllstoffen, Antistatika, organischen und anorganischen Farbmitteln einschließlich Pigmenten und Ruß, Gleit- und/oder Entformungsmitteln, Thermostabilisatoren, Verträglichkeitsvermittlern, UV-Absorbern, IR-Absorbern und/oder Blendpartnern.

13. Verwendung von 1 bis 15 Gew.-% Polysiloxan-Polycarbonat-Copolymer zur Reduzierung der Vergilbung bei thermischer Belastung einer 10 bis 40 Gew.-% Quarz- und/oder Quarzglas-haltigen Polycarbonat-basierten Zusammensetzung, wobei der D₅₀ des Quarzes/Quarzglases, bestimmt mittels Laserbeugung nach ISO 13320:2009-10, mindestens 2,0 µm beträgt und wobei sich die Mengenangaben jeweils auf die Gesamtzusammensetzung beziehen.

14. Formteil aus einer thermoplastischen Zusammensetzung nach einem der Ansprüche 1 bis 12.

15. Formteil nach Anspruch 14, wobei das Formteil ein Element eines Elektro-/Elektronik-Gehäuses, ein Autoinnenraumverkleidungselement, ein Kofferschalenelement oder ein Möbelelement ist.

## Claims

1. Thermoplastic composition, comprising:
A) 10% to 29% by weight of quartz and/or quartz glass, wherein the D₅₀ of the quartz/quartz glass determined by laser diffraction according to ISO 13320:2009-10 is at least 2.0 µm
B) 1% to 15% by weight of polysiloxane-polycarbonate copolymer as aromatic polycarbonate,
C) at least 56% by weight of further aromatic polycarbonate.

2. Thermoplastic composition according to Claim 1, wherein the quartz/the quartz glass has a D₅₀ determined by laser diffraction according to ISO 13320:2009-10 of not more than 6 µm.

3. Thermoplastic composition according to Claim 1 or 2, wherein the quartz/the quartz glass has a D₅₀ determined by laser diffraction according to ISO 13320:2009-10 of 3.5 to 6.0 µm.

4. Thermoplastic composition according to any of the preceding claims, wherein the composition comprises as component A quartz glass having a D₅₀ determined by laser diffraction according to ISO 13320:2009-10 of 3.5 to 4.4 µm and a specific surface area of 4 to 8 m²/g determined according to DIN-ISO 9277:2014-01.

5. Thermoplastic composition according to any of the preceding claims, wherein the composition is free from polyesters and/or graft polymers.

6. Thermoplastic composition according to any of the preceding claims, wherein the ratio of the amount of component B in % by weight, based on the total composition, to the BET surface area of component A in m²/g is >1.

7. Thermoplastic composition according to any of the preceding claims, wherein the amount of polysiloxane-polycarbonate copolymer is 2% to 10% by weight.

8. Thermoplastic composition according to any of the preceding claims, wherein the amount of polysiloxane-polycarbonate copolymer is 7% to 10% by weight.

9. Thermoplastic composition according to any of the preceding claims, wherein the composition comprises as component B at least copolycarbonate based on bisphenol A and polydimethylsiloxane, wherein the proportion of polydimethylsiloxane, based on this copolycarbonate, is 3% to 7% by weight.

10. Thermoplastic composition according to any of the preceding claims, wherein the composition comprises at least 68% by weight of further aromatic polycarbonate of component C, up to 10% by weight of component B and up to 22% by weight of component A.

11. Thermoplastic composition according to any of the preceding claims, wherein the composition comprises only Bisphenol A-based polycarbonate as aromatic polycarbonate in addition to component B.

12. Thermoplastic composition according to any of Claims 1 to 9 or 11, wherein the composition consists of the following components:
A) 10% to 29% by weight of quartz and/or quartz glass having a D₅₀ determined by laser diffraction according to ISO 13320:2009-10 of at least 2.0 µm
B) 1% to 15% by weight of polysiloxane-polycarbonate copolymer as aromatic polycarbonate,
C) at least 56% by weight of further aromatic polycarbonate,
D) optionally one or more additives selected from the group consisting of flame retardants, anti-drip agents, fillers distinct from component A, antistats, organic and inorganic colorants including pigments and carbon black, lubricants and/or demolding agents, heat stabilizers, compatibilizers, UV absorbers, IR absorbers and/or blend partners.

13. Use of 1% to 15% by weight of polysiloxane-polycarbonate copolymer for reducing the yellowing under thermal stress of a polycarbonate-based composition comprising 10% to 40% by weight of quartz and/or quartz glass, wherein the D₅₀ of the quartz/quartz glass determined by laser diffraction according to ISO 13320:2009-10 is at least 2.0 µm and wherein the reported amounts are each based on the total composition.

14. Molding made of a thermoplastic composition according to any of Claims 1 to 12.

15. Molding according to Claim 14, wherein the molding is an element of an electrical/electronic housing, an automotive interior trim element, a suitcase shell element or a furniture element.

## Revendications

1. Composition thermoplastique, contenant
A) 10 à 29 % en poids de quartz et/ou de verre quartzeux, la D₅₀ du quartz/du verre quartzeux, déterminée par diffraction laser selon ISO 13320:2009-10, étant d'au moins 2,0 µm,
B) 1 à 15 % en poids d'un copolymère polysiloxane-polycarbonate en tant que polycarbonate aromatique,
C) au moins 56 % en poids d'un autre polycarbonate aromatique.

2. Composition thermoplastique selon la revendication 1, dans laquelle le quartz/le verre quartzeux présente une D₅₀, déterminée par diffraction laser selon ISO 13320:2009-10, au maximum de 6 µm.

3. Composition thermoplastique selon la revendication 1 ou 2, dans laquelle le quartz/le verre quartzeux présente une D₅₀, déterminée par diffraction laser selon ISO 13320:2009-10, de 3,5 à 6,0 µm.

4. Compositions thermoplastiques selon l'une des revendications précédentes, qui contiennent en tant que composant A un verre quartzeux ayant une D₅₀, déterminée par diffraction laser selon ISO 13320:2009-10, de 3,5 à 4,4 µm et une aire massique de 4 à 8 m²/g, déterminée selon DIN-ISO 9277:2014-01.

5. Composition thermoplastique selon l'une des revendications précédentes, la composition étant exempte de polyesters et/ou de polymères greffés.

6. Composition thermoplastique selon l'une des revendications précédentes, dans laquelle le rapport de la quantité du composant B en % en poids, rapportée à la composition totale, à l'aire BET du composant A en m²/g, est > 1.

7. Composition thermoplastique selon l'une des revendications précédentes, dans laquelle la quantité du copolymère polysiloxane-polycarbonate est de 2 à 10 % en poids.

8. Composition thermoplastique selon l'une des revendications précédentes, dans laquelle la quantité du copolymère polysiloxane-polycarbonate est de 7 à 10 % en poids.

9. Composition thermoplastique selon l'une des revendications précédentes, qui en tant que composant B contient au moins un copolycarbonate à base de bisphénol A et de polydiméthylsiloxane, la proportion du polydiméthylsiloxane, rapportée à ce copolycarbonate, étant de 3 à 7 % en poids.

10. Composition thermoplastique selon l'une des revendications précédentes, la composition contenant au moins 68 % en poids d'un autre polycarbonate aromatique selon le composant C, jusqu'à 10 % en poids du composant B et jusqu'à 22 % en poids du composant A.

11. Composition thermoplastique selon l'une des revendications précédentes, qui outre le composant B en tant que polycarbonate aromatique ne contient encore qu'un polycarbonate à base de bisphénol A.

12. Composition thermoplastique selon l'une des revendications 1 à 9 ou 11, la composition étant constituée des composants suivants :
A) 10 à 29 % en poids de quartz et/ou d'un verre quartzeux ayant une D₅₀, déterminée par diffraction laser selon ISO 13320:2009-10, d'au moins 2,0 µm,
B) 1 à 15 % en poids d'un copolymère polysiloxane-polycarbonate en tant que polycarbonate aromatique,
C) au moins 56 % en poids d'un autre polycarbonate aromatique,
D) éventuellement un ou plusieurs autres additifs, choisis dans le groupe consistant en des agents retardateurs de flamme, des agents anti-goutte, des charges différentes du composant A, des antistatiques, des colorants organiques ou inorganiques y compris des pigments et du noir de carbone, des lubrifiants et/ou agents de démoulage, des thermostabilisants, des promoteurs de compatibilité, des absorbants UV, des absorbants IR et/ou des substances participant au mélange.

13. Utilisation de 1 à 15 % en poids d'un copolymère polysiloxane-polycarbonate pour réduire le jaunissement, en présence d'une contrainte thermique, d'une composition à base de polycarbonate contenant 10 à 40 % en poids de quartz et/ou de verre quartzeux, la D₅₀ du quartz/du verre quartzeux, déterminée par diffraction laser selon ISO 13320:2009-10, étant d'au moins 2,0 µm, et les indications de quantité étant chacune rapportées à la composition totale.

14. Objet moulé en une composition thermoplastique selon l'une des revendications 1 à 12.

15. Objet moulé selon la revendication 14, l'objet moulé étant un élément d'un boîtier électrique/électronique, d'un élément de garnissage de l'habitacle d'une automobile, un élément de coque de valise ou un élément de mobilier.
